# EUROPÄISCHE PATENTSCHRIFT

(11) **EP 2 693 166 B1**
(45) Veröffentlichungstag und Bekanntmachung des Hinweises auf die Patenterteilung: **09.09.2015**
(21) Anmeldenummer: 12178690.9
(22) Anmeldetag: 31.07.2012
(51) Int. Cl.: G01B 11/26, G01D 5/347

(54) **Sende- und Empfangseinheit und Drehgeber mit einer solchen**
Transmission and receiver unit and rotary encoder with such
Unité d'émission et réception et encodeur en étant équipé

(43) Veröffentlichungstag der Anmeldung: 05.02.2014
(73) Patentinhaber: SICK STEGMANN GmbH, 78166 Donaueschingen (DE)
(72) Erfinder: Mutschler, Reinhold, 78056 Villingen-Schwenningen (DE); Hopp, David, 78166 Donaueschingen (DE)
(74) Vertreter: Ludewigt, Christoph

(56) Entgegenhaltungen:
- EP-A1- 0 646 796
- EP-A2- 2 372 314
- WO-A1-2004/094957
- DE-A1- 3 220 560
- US-A1- 2011 101 209

## Beschreibung

Die Erfindung betrifft eine Sende- und Empfangseinheit für die Erfassung eines Drehwinkels sowie einen damit arbeitenden Drehgeber.

Zur Erfassung eines Drehwinkels, z. B. einer Welle werden u. a. optische Wirkprinzipien eingesetzt. Unabhängig vom jeweiligen optischen Prinzip bestehen entsprechende Sensoren aus mindestens einer Lichtquelle, einer Maßverkörperung und einem Empfänger. Die Maßverkörperung erzeugt über eine Relativbewegung zum Empfänger eine Intensitätsmodulation des Signals auf dem Empfänger, welche als Winkelsignal dient. Zwei grundlegende Aufbauvarianten finden Verwendung: transmissiv und reflexiv. Insbesondere die reflexive Auslegung, bei der der Strahlengang an der Maßverkörperung reflektiert wird, hat besondere Vorteile, da nämlich dann Sender und Empfänger auf der gleichen Seite angeordnet werden können, beispielsweise auf der gleichen Elektronikkarte. Damit ist eine echte Entkopplung von Drehgeber und drehender Welle möglich. Der Drehgeber muss die Welle lediglich noch "sehen".

In vielen Anwendungen variiert der Abstand zwischen der Maßverkörperung und der Sensoreinheit in einem großen Bereich. Deshalb ist es vorteilhaft, die Maßverkörperung, die im Falle eines Polarisationsencoders als Polarisator ausgebildet ist, möglichst parallel und symmetrisch zu dessen Rotationsachse und symmetrisch zur Sensorstruktur des Empfängers zu beleuchten, mit zur Detektorebene möglichst senkrechtem Lichteinfall. Idealerweise sollten dazu der Empfänger und der Lichtsender auf der Beleuchtungsachse bzw. der Rotationsachse angeordnet werden.

Die Auslegung eines reflexiven Strahlengangs stellt eine Herausforderung dar, da die einzelnen Komponenten, vor allem Sender und Empfänger, nicht direkt entlang einer optischen Achse ausgerichtet werden können.

Das Bestreben beim Aufbau reflexiver optischer Funktionsprinzipien für Drehwinkelsensoren ist es deshalb, die Beleuchtung, die Maßverkörperung (Polarisator) sowie den Empfänger zentrisch auf eine optische Achse zu bringen. Dies erfordert die zentrale Platzierung der Lichtquelle. Eine zentrale Platzierung der Lichtquelle wiederum erfordert eine Platzierung des Empfängers außerhalb der optischen Achse. Eine Symmetrie ergibt sich nur dann, wenn mehrere Empfänger um die Lichtquelle herum positioniert werden oder wenn das Licht umgelenkt wird. Dafür werden jedoch Strahlteiler, Spiegelsysteme o. Ä. benötigt, welche justiert werden müssen. In solchen Systemen sind die einzelnen Komponenten in verschiedenen Aufbauebenen angeordnet. Die Positionierung bzw. die Justage der optischen Komponenten in einem System mit mehreren Aufbauebenen ist aufwändig und kostenintensiv. Ebenso ist eine Umlenkung des Beleuchtungsstrahlengangs kompliziert und meist mit erheblichem Intensitätsverlust behaftet. Darüber hinaus benötigt ein solcher Aufbau erheblichen Bauraum.

Aus der US 2011/0101209 A1 ist ein spezieller Drehwinkelsensor bekannt, bei dem das Licht eines mittig angeordneten Senders von einem spährischen Reflektor reflektiert und auf kreissegmentförmige Empfangselemente, die um den Sender herum positioniert sind, fällt. Das Licht des Senders wird von einem sich drehenden Lichtblocker entsprechend der Winkelstellung geblockt, so dass über diejenigen Empfangselemente, die Licht empfangen, ein Winkel bestimmt werden kann.

Aus der DE 32 20 560 A1, Fig. 4, ist ein fotoelektrischer Kodierer bekannt, mit einer gattungsgemäßen Sende- und Empfangseinheit, die allerdings nicht zur Winkelkodierung ausgebildet ist.

Aus der EP 0 646 796 A1, Fig. 12, ist ein Drehwinkelsensor bekannt, mit einer gattungsgemäßen Sende- und Empfangseinheit, bei der das Sendelicht umständlich über Lichtleiter durch eine Maßverkörperung und zu einem Empfänger geführt ist.

Davon ausgehend ist es Aufgabe der Erfindung, ein neues Aufbaukonzept zur Positionierung der Lichtquelle und des Empfängers vorzustellen, mit dem die vorgenannten Nachteile vermieden werden können, also insbesondere eine Anordnung zu schaffen, die einen Strahlengang zulässt, der annähernd parallel zur Rotationsachse des Sensors sowie symmetrisch zum Empfänger ist, und keine Beschränkung für die Minimierung der Chipfläche eines Polarisationssensors darstellt, und zugleich den Aufbau eines kompaktes Sensormoduls ermöglicht.
Diese Aufgabe wird gelöst durch eine Sende- und Empfangseinheit mit den Merkmalen des Anspruchs 1 und einen Drehgeber für die Erfassung eines Drehwinkels mit den Merkmalen des Anspruchs 14.

Eine erfindungsgemäße Sende- und Empfangseinheit für die Erfassung eines Drehwinkels umfasst einen Lichtsender zur Aussendung von Sendelicht auf eine Maßverkörperung und einen Lichtempfänger mit einer Vorderseite zum Empfang von durch die der Vorderseite gegenüberliegende Maßverkörperung beeinflusstem Empfangslicht und mit einer Rückseite, die auf einem für das Sendelicht transparenten Träger aufliegt. Der transparente Träger ist zwischen dem Lichtempfänger und dem Lichtsender angeordnet, und es ist eine Lichtumlenkvorrichtung zum Umlenken des Sendelichts vorgesehen. Dabei besitzt der Träger gezielt geformte Oberflächen und kann somit eine Linsenfunktion erfüllen.

Ein wesentlicher Vorteil der Erfindung ist der so mögliche symmetrische Aufbau, so dass Lichtsender und Lichtempfänger im Wesentlichen kollinear angeordnet werden können, so dass ein kompakter kleiner Aufbau gewährleistet ist, ohne dass mehrere Aufbauebenen notwendig sind. Es werden dafür nur wenige Komponenten benötigt. Lichtsender und Lichtempfänger sind zu einer einfach zu handhabenden Einheit integriert.

Die erfindungsgemäße Sende- und Empfangseinheit mit dem Empfänger bzw. Empfängerchip und dem integrierten Lichtsender ist als Optikmodul flexibel einsetzbar und für unterschiedlichste optische Funktionsprinzipien geeignet. Eine störende direkte Beleuchtung des Empfängers durch den Lichtsender ist praktisch ausgeschlossen.

Durch die gezielt geformte Oberflächen des Trägers kann dieser auch eine Linsenfunktion übernehmen, wodurch weitere separate optische Komponenten für das Empfangslicht eingespart werden können.

Weitere Vorteile sind eine Kapselung der Beleuchtung und der Strahlformung, eine sehr gute Streulicht- und Störlichtunterdrückung und eine gute Wärmeabfuhr für den Lichtsender.

Um optimale Messergebnisse zu erzielen, ist das Sendelicht um den Lichtempfänger herum in Richtung auf die Maßverkörperung rotationssymmetrisch zur optischen Achse geführt.

In einer konstruktiv symmetrischen und damit leichter justierbaren Konfiguration liegen die optischen Achsen von Lichtsender und Lichtempfänger kollinear.

Wenn das Sendelicht mittels spiegelnd ausgebildeter Flächen, insbesondere Freiformflächen, die dem Lichtsender gegenüberliegen, umgelenkt wird, ist damit auch eine aktive Beeinflussung der Beleuchtungscharakteristik durch die Freiformflächen, Blenden, und dergleichen möglich. Ebenso kann ein größerer Nutzlichtanteil auf der Maßverkörperung bzw. auch auf dem Lichtempfänger durch Bündelung der unterschiedlichen Winkelbereiche des emittierten Lichts (Kaustik) erreicht werden.

Alternativ kann das Sendelicht mittels eines Lichtleiters geführt sein.

Zum Schutz des Lichtempfängers kann dieser in bekannter Weise in einem optisch transparentem Verguss gehalten sein, wobei der Verguss vorteilhafterweise strahlformende Eigenschaften für das Sendelicht aufweisen kann.

Zur Symmetrieerhöhung und damit Verbesserung des Messergebnisses insbesondere bei Polarisationsencodern, ist in Weiterbildung zwischen Lichtsender und Lichtempfänger wenigstens eine lichtundurchlässige vorzugsweise kreisrunde Maskierung angeordnet.

Vorteilhafterweise besteht der transparente Träger aus Glas.

Gleiches gilt, wenn der Träger als optisches Filter zur Wellenlängenselektion ausgebildet ist und/oder diffraktive Strukturen zur Beugung, Umlenkung oder Dispersion des Lichts aufweist und/oder zusätzlich eine Polarisation des Lichts bewirkt.

Mit Vorteil ist der Lichtempfänger als Empfängerarray als CCD oder in CMOS Bauweise ausgebildet und der Lichtsender als eine LED, ein LED-Chip, eine Laserdiode oder ein Laserchip, wobei der Lichtempfänger vorzugsweise die Signalverarbeitung und Signalschnittstelle beinhaltet und vorzugsweise als Ein-Chip-System (SOC, system on a chip) auch einen Microcontroller, programmierbare Logik oder andere komplexe Schaltungen enthält.

Vorteilhafterweise wird die erfindungsgemäße Sende- und Empfangseinheit in einem Drehgeber zur Messung des Drehwinkels zweier relativ zueinander rotierender Objekte eingesetzt.

Besonders vorteilhaft ist die Erfindung einsetzbar in Drehwinkelsensoren, die nach dem polarisationsoptischen Prinzip den Drehwinkel bestimmen und bei denen der Strahlengang reflexiv ausgelegt ist. Dazu weist der Drehgeber einen Polarisator auf, der sich relativ zur Lichtquelle dreht und eine Maßverkörperung bildet. An dem Polarisator wird das Sendelicht reflektiert und tritt durch einen polarisierenden Analysator. Der Empfänger weist wenigstens zwei Empfangselemente auf, vorzugsweise ist der Empfänger als Lichtempfängerarray ausgebildet, dessen einzelne Empfängerelemente jeweils mit als Analysator dienenden Polarisationsstrukturen versehen sind, welche unterschiedliche Polarisationsrichtungen aufweisen. Durch Auswertung der so erhaltenen Signale der Empfangselemente kann inkremental ein Drehwinkel und eine Drehrichtung bestimmt werden. Optional werden Lichtquelle und Empfänger mit lichtleitenden, strahlformenden oder abbildenden optischen Elementen in Form von Linsen, oder Mikrostrukturen wie Mikrolinsenarrays oder DOEs und Reflektoren kombiniert, um die Eigenschaften des Drehwinkelsensors zu verbessern.

Um eine Eindeutigkeit über 360° zu erzielen, kann der Polarisator als Scheibe mit einer Normalen ausgebildet sein, wobei die Normale mit der Drehachse einen von Null verschiedenen Winkel bildet.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung der wesentlichen Komponenten eines erfindungsgemäßen Drehgebers mit einer erfindungsgemäßen Sende- und Empfangseinheit;
- Fig. 2 bis 5: weitere Ausführungsformen der Sende- und Empfangseinheit;
- Fig. 6: eine Draufsicht auf die Ausführungsform nach Fig. 5;
- Fig. 7 bis 11: weitere Ausführungsformen der Sende- und Empfangseinheit.

Ein erfindungsgemäßer Drehgeber 10 umfasst eine erfindungsgemäße Sende- und Empfangseinheit 12 für die Erfassung eines Drehwinkels einer Welle 14, die sich um eine Drehachse 16 in Pfeilrichtung 18 dreht. Der Drehgeber 10 ist drehfest angeordnet und kann die Drehung der Welle in diesen Ausführungsbeispielen nach dem polarisationsoptischen Prinzip bestimmen.

Die Sende- und Empfangseinheit 12 weist einen Lichtsender 20 zum Aussenden von Sendelicht 22, das letztendlich eine Maßverkörperung 24 beleuchtet, auf, sowie einen Lichtempfänger 26 zum Empfang von durch die Maßverkörperung 24 beeinflusstem Empfangslicht 28.

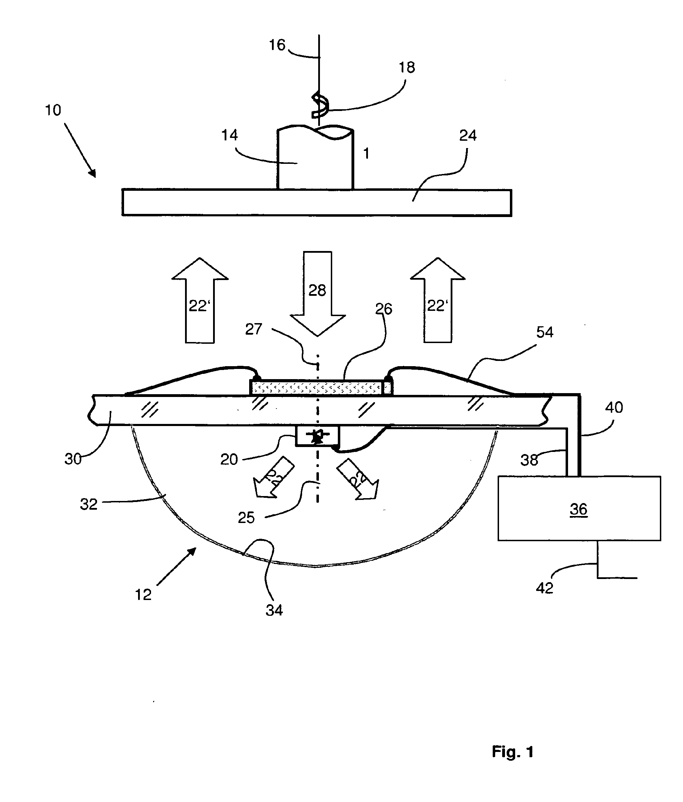

Der Lichtempfänger 26 ist vorzugsweise als Lichtempfängerarray mit mehreren Empfangselementen in CCD- oder CMOS-Bauweise ausgebildet. Er weist eine Vorderseite zum Empfang des Empfangslichts und eine Rückseite auf, mit der er auf einem für das Sendelicht 22 transparenten Träger 30 aufliegt, z. B. aufgeklebt ist. Der transparenten Träger 30 ist zwischen dem Lichtsender 20 und Lichtempfänger 26 angeordnet und bevorzugt planparallel aus Glas ausgebildet. Dabei sind der Lichtsender 20 und der Lichtempfänger 26 in diesem Ausführungsbeispiel so zueinander angeordnet, dass ihre jeweiligen optischen Achsen 25 und 27 kollinear sind und bevorzugt, wie in Fig. 1 dargestellt, auch mit der Drehachse 16 zusammenfallen. Je symmetrischer die Anordnung desto bessere Messergebnisse lassen sich erzielen.

Der Lichtsender 20 ist an der dem Lichtempfänger 26 gegenüberliegenden Seite (Unterseite in Fig. 1) angeordnet, beispielsweise geklebt und strahlt dann das Sendelicht 22 in eine Richtung ab, die von der Maßverkörperung 24 weg zeigt (in der Fig. 1 nach unten). Damit das Sendelicht 22 überhaupt in Richtung der Maßverkörperung 24 umgelenkt wird, ist eine Lichtumlenkvorrichtung 32 vorgesehen, die in der einfachsten Ausführungsform (Fig. 1) aus einem parabolähnlichem Spiegel 34 besteht. Die Lichtumlenkvorrichtung 32 lenkt das Sendelicht 22 um den Lichtempfänger 26 herum in Richtung 22' auf die Maßverkörperung 24. Dabei wird das Sendelicht 22 rotationssymmetrisch zur optischen Achse geführt. Der Lichtsender 20 kann eine LED, ein LED-Chip, eine Laserdiode oder ein Laserchip sein.

Weiter ist eine Steuer- und Auswerteinheit 36 vorgesehen, die über geeignete elektrische Verbindungen 38 einerseits mit dem Lichtsender 20 zur Ansteuerung des Lichtsenders 20 verbunden sind und andererseits über Verbindungen 40 mit dem Lichtempfänger 26 zur Spannungsversorgung und Übertragung der Sensorsignale sowie Konfigurationseinstellungen. In der Auswerteeinheit werden die Signale ausgewertet und die Ergebnisse, z. B. in Form von Winkelwerten, an einem Ausgang 42 als Ausgangssignale ausgegeben. Damit die elektrischen Anschlüsse zugänglich sind, müssen diese durch den transparenten Bereich an den Rand des Schaltungsträgers geführt werden. Damit diese sich nicht störend auf die Beleuchtung durch das Sendelicht auswirken, kann deren Anzahl durch das Verwenden einer seriellen Schnittstelle für die Übertragung der Sensorsignale und eine eventuell erforderliche Konfigurationsschnittstelle minimiert werden.

Der wesentliche Vorteil und besondere Sinn und Zweck der erfindungsgemäßen Sende- und Empfangseinheit 12 wird deutlich bei Betrachtung des damit ausgerüsteten erfindungsgemäßen Drehgebers 10. Als Beispiel wird die Funktionsweise eines Drehgebers beschrieben, der nach dem Prinzip der Polarisation, also durch Detektion einer Polarisationsrichtung, den Drehwinkel bestimmt.

Das Licht 22 bzw. 22' des Lichtsenders, das im Falle einer LED unpolarisiert ist, wird wie beschrieben um den Lichtempfänger 26 herum geführt und trifft auf die sich mit der Welle 14 drehende Maßverkörperung 24, die als Linearpolarisator 24 ausgebildet ist. Das von dem Polarisator 24 reflektierte Licht 28 weist dann eine lineare Polarisation auf, deren Richtung dem aktuellen Drehwinkel der Welle 14 entspricht. Das reflektierte Licht durchtritt die vor dem jeweiligen Empfangselement angeordnete, als Analysator dienenden, lineare Polarisationsstruktur und erzeugt in dem jeweiligen, als Lichtempfänger dienenden, Empfangselement ein Signal das mit dem sin² des Verdrehwinkels des Polarisators 24 gegenüber dem Analysator moduliert wird. Werden mehrere Empfangselemente verwendet, deren zugeordnete Polarisationsstrukturen einen Winkelversatz zueinander aufweisen, so werden mehrere zueinander phasenversetzte Signale erzeugt, die z. B. 90° zueinander versetzt sind, wenn die betreffenden Polarisationsstrukturen um 45° zueinander verdreht sind. Aus den phasenversetzten Signalen kann in bekannter Weise ein Drehwinkel und eine Drehrichtung berechnet werden.

Prinzipiell ist eine solche Erfassung des Drehwinkels zweier relativ zueinander um eine Drehachse rotierender Objekte mit Hilfe der Polarisationseigenschaften des Lichts bekannt. Beispiele für derartige Vorrichtungen zeigen die DE 100 05 277 A1, DE 201 02 192 U1, EP 2 187 78 A1, EP 1 507 137 A1 oder US 7,777,879.

In der Ausführungsform nach Fig. 1 ist der Träger 30 als planparallele Glasplatte ausgeführt. Es wäre auch denkbar, den Träger nicht planparallel auszubilden, sondern z. B. sphärische Linsenformen, asphärische Linseformen, Fresnellinsenformen oder dergleichen vorzusehen, um gezielt das Sendelicht 22 zu beeinflussen, beispielsweise zur optischen Achse hin zu brechen. Des Weiteren könnte der transparente Träger 30 mit diffraktiven Strukturen versehen werden, so dass eine Beugung, Umlenkung, Dispersion etc. des Lichts implementiert werden kann. Ebenso können Polarisationseigenschaften direkt in den Träger integriert sein. Auch können Farbfilterfunktionen im transparenten Träger 30 direkt vorgesehen sein.

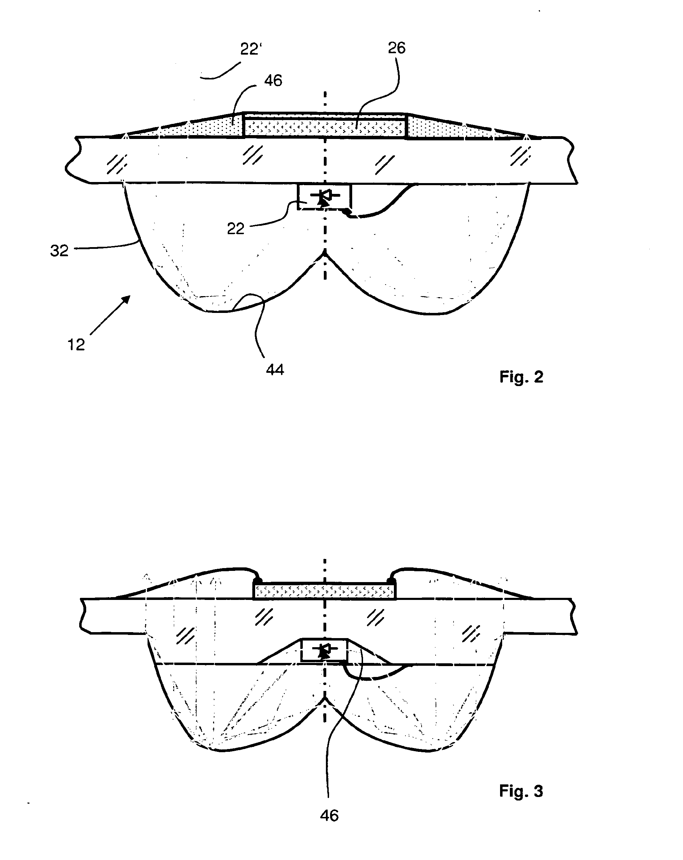

Auch die Lichtumlenkvorrichtung kann andere Formen als die im Ausführungsbeispiel nach Fig. 1 beschriebene haben. In einem in Fig. 2 dargestellten Beispiel, in dem die Sende- und Empfangseinheit 12 prinzipiell gleich aufgebaut sind, ist die Lichtumlenkvorrichtung 32 als Freiformfläche ausgebildet. Diese ist rotationssymmetrisch und so geformt, dass möglichst alles Sendelicht 22 um den Lichtempfänger 26 herum in die Richtung 22' geführt wird. Zusätzlich weist der Lichtempfänger 26 einen an sich bekannten transparenten Verguss 46 auf, der nicht nur Bonddrähte 54 schützt, sondern auch eine gewünschte lichtbrechende Wirkung auf das durch ihn hindurchtretende Sendelicht 22 hat.

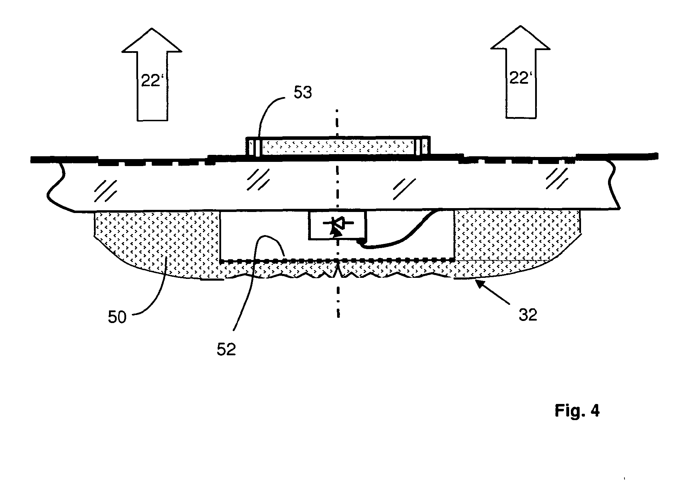

Statt der üblichen Verwendung von Bonddrähten ist ein Chipaufbau mit Rückseitenkontaktierung vorteilhaft. Mit Hilfe sogenannter "through silicon vias" 53 (Fig. 4) werden dazu die elektrischen Anschlüsse auf die Rückseite des Sensor-Chips gebracht, was erlaubt, diesen ähnlich wie ein Ball-Grid-Array zu kontaktieren.

Lichtsender 20, wie beispielsweise eine LED, haben häufig einen sehr großen Öffnungswinkel für das ausgesandte Licht. Um das von der LED seitlich abgestrahlte Licht nicht zu verlieren, kann die LED in einer als Reflektor ausgebildeten Kavität 48 (Fig. 3) angeordnet sein. Die Kavität 48 kann als Reflektor direkt in den transparenten Träger integriert sein und sowohl als einfacher Konus, wie in Fig. 3 dargestellt, oder als gekrümmte Fläche ausgeführt werden.

In einem weiteren in Fig. 4 dargestelltem Ausführungsbeispiel ist die Lichtumlenkvorrichtung 32 als Lichtleiter 50 ausgebildet, in den das Sendelicht an einer Fläche 52 mittels geeigneter Gitterstrukturen eingekoppelt und im Lichtleiter 50 so geleitet wird, dass es die gewünschte Umlenkung Richtung 22' erfährt. Vorteilhaft ist es, mindestens im Bereich des Lichtaustritts die Oberfläche mit reflexionsmindernden Schichten oder Strukturen zu versehen.

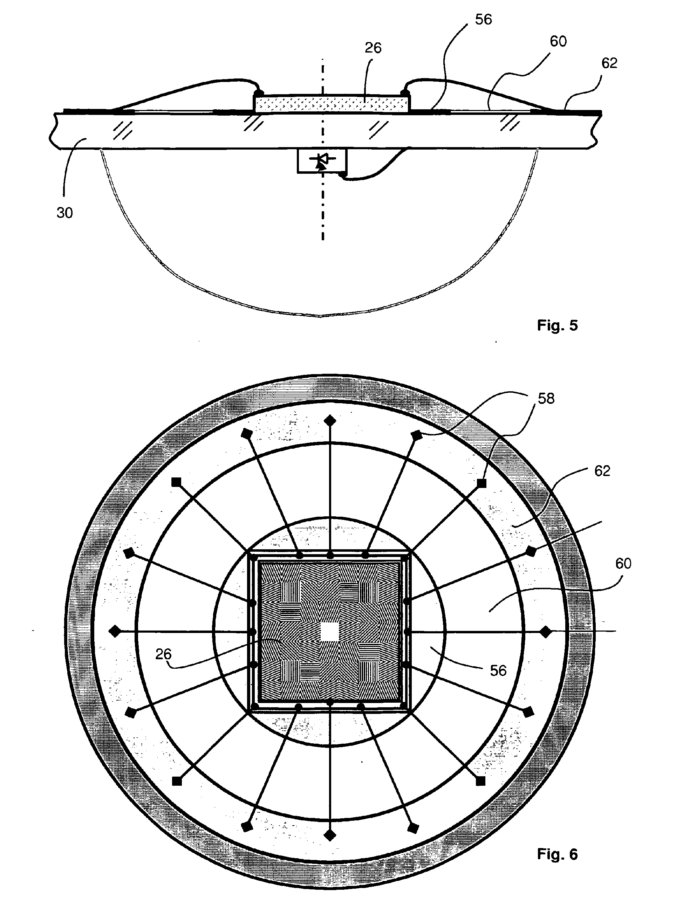

Wird der Lichtempfänger 26 wie oben beschrieben über Bonddrähte 54 kontaktiert, werden die Bondanschlüsse auf dem Lichtempfänger 26 (Chip) vorzugsweise über den Umfang gleichmäßig verteilt und die Bonddrähte 54 werden vorzugsweise vom Zentrum aus radial nach außen zu Bond-Inseln 58 auf dem transparenten Schaltungsträger geführt (Fig. 6). Da Halbleiterchips immer rechteckig sind, würde deren Geometrie die Symmetrie der Beleuchtung stören. Deshalb wird in einer Ausführungsform nach Fig. 5 und 6 unter dem Lichtempfängerchip 26 auf dem Träger 30 eine runde, nicht transparente Fläche (z. B. Metallfläche) 56 vorgesehen. Diese deckt auch den Bereich ab, in dem der für die Chipmontage erforderliche Leitkleber über die Kanten des Chips hinaustritt und der ansonsten für den Lichtpfad eine asymmetrische, ungleichförmige Begrenzung darstellen würde.

In einer weiteren Ausführungsform ist der transparente Bereich 60 um die runde Maskierung 56 mit einer weiteren runden nicht transparenten Abdeckung 62 umgeben, so dass sich für das Sendelicht ein ringförmiger Lichtpfad durch den transparent verbleibenden Bereich 60 ergibt. Die äußere nicht transparente Abdeckung 62 maskiert im Falle einer Kontaktierung des Sensor-Chips mittels Bonddrähten auch die etwas großflächigen Bond-Inseln 58 auf dem ansonsten transparenten Träger.

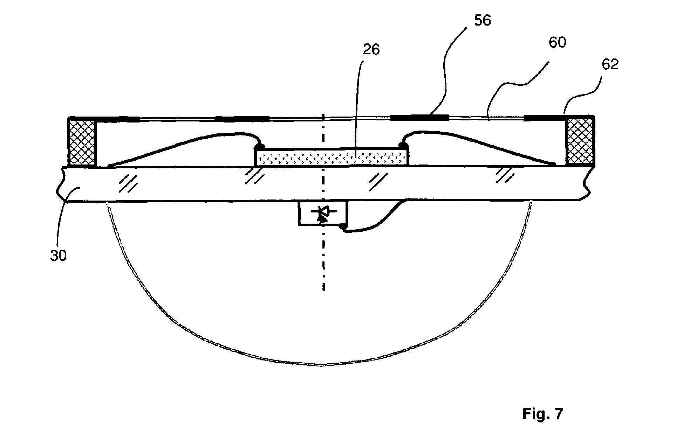

Die Maskierung 56 und Abdeckung 62 zur Begrenzung des Lichtpfads werden in der Ausführungsform nach Fig. 5 und 6 direkt auf dem transparenten Träger aufgebracht. In einer weiteren Ausführungsform nach Fig. 7 sind diese in einer zweiten über dem Sensor-Chip 26 liegenden Ebene platziert.

Aufgrund der physikalischen Eigenschaften der Polarisation weisen bei einem Polarisationsencoder die drehwinkelabhängigen Signale wenigstens zwei Perioden pro Umdrehung um 360° auf, weshalb die Winkelstellung des als Maßverkörperung dienenden Polarisators nicht ohne Weiteres absolut über eine ganze Umdrehung bestimmt werden kann. Es fehlt eine Information, die eine Eindeutigkeit über 360° liefern würde.

Um eine solche Information bereitzustellen, ist in einer Weiterbildung der Erfindung vorgesehen, dass die Maskierung 56 in der zweiten Ebene im zentralen Bereich 60.1 (Fig.7), der den Lichtempfänger offen lässt, die Aufgabe einer Schattenwurfmaske übernimmt, die die darunter liegenden Sensorelemente teilweise abdeckt. Ist der Polarisator so montiert, dass dessen Normale zusammen mit der Drehachse einen von null abweichenden Winkel bildet, dreht sich der durch Maskierung gebildete Schatten beim Drehen der Welle über die Empfangselemente, so dass dadurch den gemessenen Signalen eine weitere Intensitätsmodulation, die über 360° periodisch ist, aufgeprägt wird, bzw. in separaten Empfangselementen sinus- und kosinusförmig modulierte Signale erzeugt werden, wodurch die fehlende Information zur Erlangung der Eindeutigkeit bereitgestellt wird.

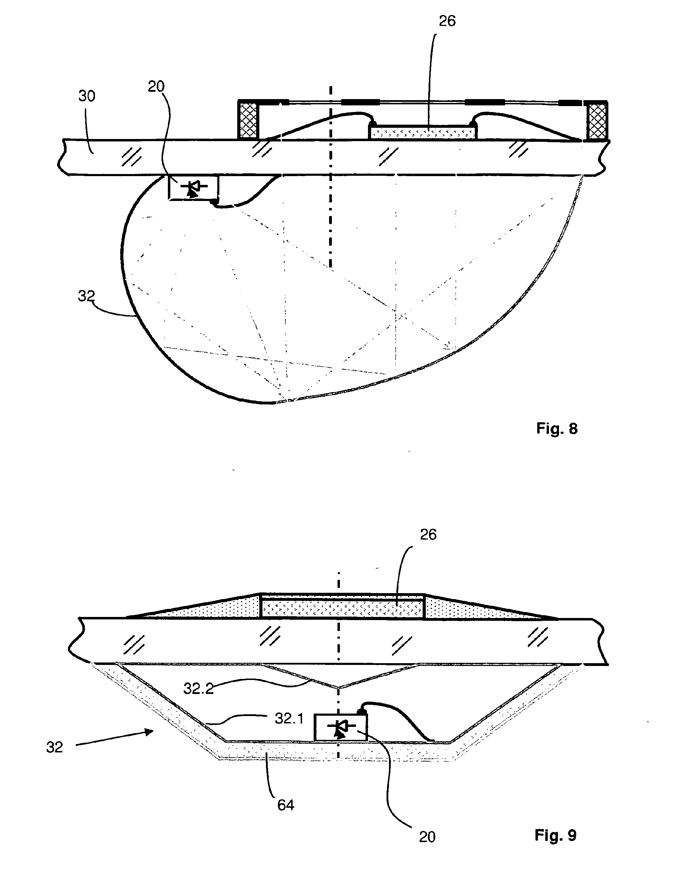

Lichtquelle 20 und Empfänger 26 müssen nicht unbedingt kollinear auf einer optischen Achse liegen. Fig. 8 zeigt eine Ausführungsform, in der der Lichtsender 20 außermittig auf der Unterseite (nach Fig. 8) des Trägers 30 angeordnet ist, dessen Licht aber gemäß der Erfindung um den Lichtempfänger herumgeführt ist, was hier durch die Lichtumlenkvorrichtung 32 als verspiegelte Freiformfläche erfolgt.

In weiteren in den Fig. 9 bis 11 dargestellten Ausführungsformen ist der Lichtsender 20 nicht auf dem gleichen Träger 30 wie der Lichtempfänger 26 montiert, sondern auf einem unter dem Lichtempfänger 26 angeordneten Substrat 64, in der Weise dass der Lichtsender 20 im Prinzip auf die Lichtempfängerrückseite strahlt. Wiederum ist eine Lichtumlenkvorrichtung 32 vorgesehen, mit der das Sendelicht 22 um den Lichtempfänger herum in Richtung auf die Maßverkörperung geführt wird.

In dem Ausführungsbeispiel nach Fig. 9 ist dies ein Reflektor 32.1, auf dessen Boden der Lichtsender 20 angeordnet ist und der sich Richtung Maßverkörperung öffnet. Um den Sendelichtanteil, der in dieser Ausführung auf die Rückseite des Lichtempfängers 26 strahlt, nicht zu verlieren, ist ein kegelförmiger Reflektor 32.2 vorgesehen, der den Bereich des Lichtempfängers 26 überdeckt und das auf diesen Bereich strahlende Licht reflektiert, welches wiederum von dem Reflektor 32.1 in dem der Lichtsender 20 montiert ist, in einem ringförmigen Bereich um den Lichtempfänger 26 herum geführt wird. In Abweichung von der Darstellung in Fig. 9 könnte der Reflektor 32.1 vorzugsweise auch als gekrümmte Freiformfläche geformt sein, um eine bessere Strahlführung zu gewährleisten.

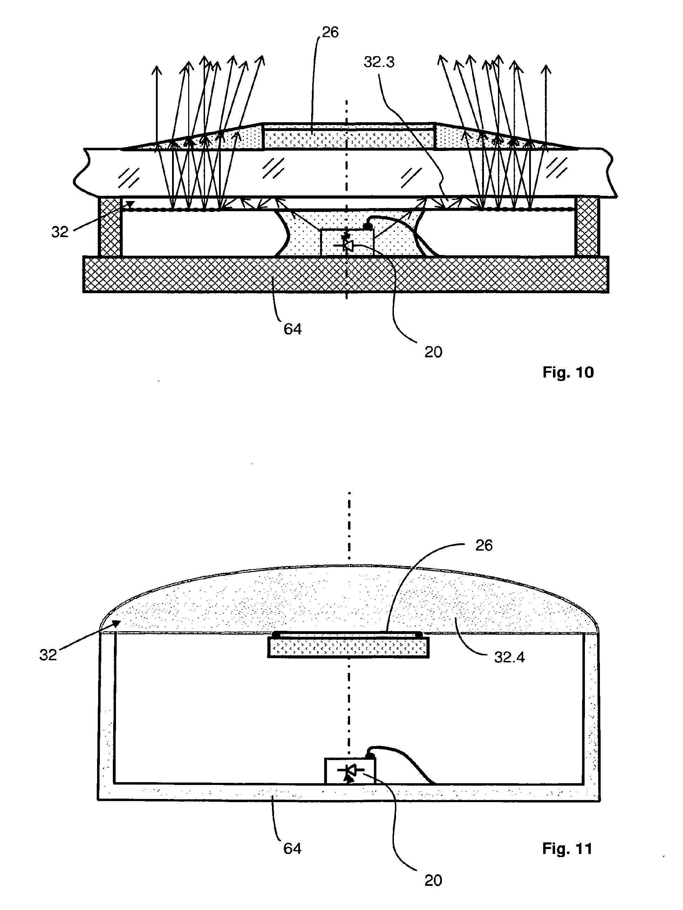

In einer weiteren Ausführungsform nach Fig. 10 ist zur Lichtumlenkung eine Lichtleiterstruktur 32.3 vorgesehen, mit der das Licht nach außen geleitet wird und dann in einem ringförmigen Bereich um den Lichtempfänger 26 herum austritt.

In einer weiteren Ausführungsform nach Fig. 11 ist zur Lichtumlenkung eine Linse 32.4 vorgesehen, die auch als Fresnellinse oder mit Hilfe diffraktiver optischer Elemente realisiert sein kann, mit der das Licht so gerichtet wird, dass dieses leicht konvergent auf den Polarisator 24 strahlt. In dieser Ausführungsform ist der Lichtempfänger in Flip-Chip-Technik mit der lichtempfindlichen Vorderseite auf die plane Rückseite der Linse aufgebracht, die zugleich als Leitungsträger dient. Die Ausführung eines Lichtempfängers als Flip-Chip-Bauteil ist besonders vorteilhaft, da zur Kontaktierung des Lichtempfängers keine Bonddrähte erforderlich sind und der Schaltungsträger in diesem Fall die Funktion des Lichtempfängers durch weitere Eigenschaften, wie Farbfilter oder Polarisationsfilter ergänzen kann. Die LED kann in dieser Ausführungsform wie schon in Fig. 9 gezeigt in einem Reflektor montiert sein, welcher das Licht um den Empfängerchip herumleitet oder wie in Fig. 10 beschrieben auf einem zweiten Träger, wobei das Licht mithilfe einer Lichtleiterstruktur um den Empfängerchip herumgeleitet wird und die Rückseite des Lichtempfängers außerdem als Reflektor dient.

## Patentansprüche

1. Sende- und Empfangseinheit für die Erfassung eines Drehwinkels mit einem Lichtsender (20) zur Aussendung von Sendelicht (22) auf eine Maßverkörperung (24) und mit einem Lichtempfänger (26), der auf einem für das Sendelicht (22) transparenten Träger (30) aufliegt, mit einer Vorderseite zum Empfang von durch die der Vorderseite gegenüberliegende Maßverkörperung (24) beeinflusstem Empfangslicht (28) und einer Rückseite, die dem Lichtsender zugewandt ist, wobei der transparente Träger als Schaltungsträger (30) dient und elektrische Verbindungen zu dem Lichtempfänger (26) trägt und eine Lichtumlenkvorrichtung (32) zum Umlenken des Sendelichts (22) vorgesehen ist, wobei der Lichtsender (20) und der Lichtempfänger (26) so zueinander angeordnet sind, dass ihre jeweiligen optischen Achsen (25 und 27) kollinear sind, **dadurch gekennzeichnet, dass** der Träger (30) gezielt geformte Oberflächen besitzt und so eine Linsenfunktion erfüllt.

2. Sende- und Empfangseinheit nach Anspruch 1, **dadurch gekennzeichnet, dass** der Lichtempfänger mit seiner Rückseite auf dem transparente Träger aufliegt und dieser zwischen dem Lichtempfänger und dem Lichtsender angeordnet ist und das Sendelicht um den Lichtempfänger herum in Richtung auf die Maßverkörperung rotationssymmetrisch zur optischen Achse geführt ist.

3. Sende- und Empfangseinheit nach einem der vorhergehenden Ansprüche, **dadurch gekennzeichnet, dass** das Sendelicht mittels spiegelnd ausgebildeter Flächen, insbesondere Freiformflächen, die dem Lichtsender gegenüberliegen, umgelenkt wird.

4. Sende- und Empfangseinheit nach einem der vorhergehenden Ansprüche, **dadurch gekennzeichnet, dass** das Sendelicht mittels eines Lichtleiters geführt ist.

5. Sende- und Empfangseinheit nach einem der vorhergehenden Ansprüche, **dadurch gekennzeichnet, dass** der Lichtempfänger in einen optisch transparenten Verguss eingebettet ist und der Verguss strahlformende Eigenschaften für das Sendelicht aufweist.

6. Sende- und Empfangseinheit nach einem der vorhergehenden Ansprüche, **dadurch gekennzeichnet, dass** zwischen Lichtsender und Lichtempfänger wenigstens eine lichtundurchlässige, vorzugsweise kreisrunde, Maskierung angeordnet ist.

7. Sende- und Empfangseinheit nach einem der vorhergehenden Ansprüche, **dadurch gekennzeichnet, dass** der transparente Träger aus Glas besteht.

8. Sende- und Empfangseinheit nach einem der vorhergehenden Ansprüche, **dadurch gekennzeichnet, dass** der transparente Träger aus einem Polymer und/oder aus einem flexiblen Material besteht und für die gewählte Wellenlänge transparent ist.

9. Sende- und Empfangseinheit nach einem der vorhergehenden Ansprüche, **dadurch gekennzeichnet, dass** der Lichtempfänger mit seiner Vorderseite auf dem Träger aufliegt und mit Flip-Chip-Technik kontaktiert ist.

10. Sende- und Empfangseinheit nach einem der vorhergehenden Ansprüche, **dadurch gekennzeichnet, dass** der Träger ein optisches Filter mit Wellenlängenselektion umfasst.

11. Sende- und Empfangseinheit nach einem der vorhergehenden Ansprüche, **dadurch gekennzeichnet, dass** der Träger diffraktive Strukturen aufweist zur Beugung oder Dispersion des Sendelichts.

12. Sende- und Empfangseinheit nach einem der vorhergehenden Ansprüche, **dadurch gekennzeichnet, dass** der Träger eine Polarisation des Lichts bewirkt.

13. Sende- und Empfangseinheit nach einem der vorhergehenden Ansprüche, **dadurch gekennzeichnet, dass** der Lichtempfänger als Empfängerarray als CCD oder in CMOS Bauweise ausgebildet ist und vorzugsweise die Signalverarbeitung und Signalschnittstelle beinhaltet und/oder vorzugsweise als Ein-Chip-System auch einen Microcontroller, programmierbare Logik oder andere komplexe Schaltungen enthält.

14. Drehgeber zur Messung des Drehwinkels zweier relativ zueinander rotierender Objekte mit einer Sende- und Empfangseinheit nach einem der vorhergehenden Ansprüche, **dadurch gekennzeichnet, dass** dieser als Polarisationsencoder ausgebildet ist mit einem Polarisator, der sich relativ zur Lichtquelle dreht und an dem das Sendelicht reflektiert wird, und dass der Empfänger wenigstens zwei Empfangselemente aufweist, denen wenigstens ein polarisierender Analysator vorgeordnet ist, wobei die beiden Empfangselemente einen Drehwinkelabstand zueinander haben.

## Claims

1. A transmission and reception unit for the detection of a rotary angle comprising a light transmitter (20) for the transmission of transmitted light (22) to a dimensional scale (24); a light receiver (26) which lies on a support (30) transparent for the transmitted light (22), the light receiver having a front side for the reception of reception light (28) influenced by the dimensional scale (24) disposed opposite the front side, the light receiver having a rear side which faces the light transmitter; wherein the transparent support serves as a circuit support (30) and supports electrical connections to the light receiver (26); and a light deflection apparatus (32) for the deflection of the transmitted light (22), wherein the light transmitter (20) and the light receiver (26) being arranged with regard to one another such that their respective optical axes (25 and 27) are collinear, **characterized in that** the support (30) has a specifically shaped surface and thus satisfies a lens function.

2. The transmission and reception unit in accordance with claim 1, wherein the rear side of the light receiver lies on the transparent support, the transparent support being arranged between the light receiver and the light transmitter, with the transmitted light being guided around the light receiver in the direction toward the dimensional scale rotationally symmetric with respect to the optical axis.

3. The transmission and reception unit in accordance with any preceding claim, wherein the transmitted light is deflected by means of surfaces configured as reflective surfaces, especially free form surfaces, the surfaces being disposed opposite the light transmitter.

4. The transmission and reception unit in accordance with any preceding claim, wherein the transmitted light is guided by means of a light guide.

5. The transmission and reception unit in accordance with any preceding claim, wherein the light receiver is embedded in an optically transparent material layer and the material layer has beam forming properties for the transmitted light.

6. The transmission and reception unit in accordance with any preceding claim, wherein at least one light impermeable mask, preferably a circular mask, is arranged between the light transmitter and the light receiver.

7. The transmission and reception unit in accordance with any preceding claim, wherein the transparent support is composed of glass.

8. The transmission and reception unit in accordance with any preceding claim, wherein the transparent support is composed of at least one of a polymer and a flexible material and the transparent support is transparent for the selected wavelength.

9. The transmission and reception unit in accordance with any preceding claim, wherein the front surface of the light receiver lies on the support and is contacted by means of flip chip technology.

10. The transmission and reception unit in accordance with any preceding claim, wherein the support comprises an optical filter having wavelength selection.

11. The transmission and reception unit in accordance with any preceding claim, wherein the support has diffractive structures for the diffraction or dispersion of the transmitted light.

12. The transmission and reception unit in accordance with any preceding claim, wherein the support brings about a polarization of the light.

13. The transmission and reception unit in accordance with claim 1, wherein the light receiver is configured as a reception array, as a CCD or in a CMOS manner of construction and includes preferably the signal processing and the signal interface and/or the light receiver also includes as a one-chip system at least one of a microcontroller, programmable logic and other complex circuits.

14. A rotary encoder for the measurement of a rotary angle of two objects rotating relative to one another, comprising a transmission and reception unit according to anyone of the preceding claims, **characterized in that** this rotary encoder is configured as a polarization encoder having a polarizer which rotates relative to a light source and at which polarizer the transmitted light is reflected; and wherein the receiver has at least two reception elements upstream of which at least one polarizing analyzer is arranged, with the two reception elements having a rotary angle spacing with respect to one another.

## Revendications

1. Une unité de transmission et de réception pour la détection d'un angle de rotation comprenant un émetteur de lumière (20) pour la transmission de la lumière transmise (22) à une échelle dimensionnelle (24) un récepteur de lumière (26) qui se trouve sur un support (30) transparent pour la lumière transmise (22), le récepteur de lumière présentant une face avant pour la réception de la lumière de réception (28) influencé par l'échelle dimensionnelle (24) disposée en face de la côté avant, le récepteur de lumière ayant un côté arrière qui fait face à l'émetteur de lumière; dans lequel le support transparent sert comme support de circuit (30) et supporte les connexions électriques vers le récepteur de lumière (26), et un dispositif de déviation de lumière (32) pour la déviation de la lumière transmise (22), dans lequel l'émetteur de lumière (20) et le récepteur de lumière (26) sont disposés par rapport à l'autre de sorte que leurs axes optiques respectifs (25 et 27) sont colinéaires, **caractérisé en ce que** le support (30) présente une surface de forme spécifique et remplit une fonction de lentille ainsi.

2. L'unité de transmission et de réception selon la revendication 1, dans lequel la face arrière du récepteur de lumière se trouve sur le support transparent, le support transparent est disposé entre le récepteur de lumière et l'émetteur de lumière, et la lumière transmise est guidée autour de la lumière récepteur dans la direction de l'échelle dimensionnelle à symétrie de révolution par rapport à l'axe optique.

3. L'unité de transmission et de réception selon l'une quelconque des revendications précédentes, dans lequel la lumière transmise est déviée au moyen de surfaces configurées comme des surfaces réfléchissantes, les surfaces de forme libre en particulier, les surfaces étant disposée en face de l'émetteur de lumière.

4. L'unité de transmission et de réception selon l'une quelconque des revendications précédentes, dans lequel la lumière transmise est guidée au moyen d'un guide de lumière.

5. L'unité de transmission et de réception selon l'une quelconque des revendications précédentes, dans lequel le récepteur de lumière est incorporé dans une couche de matériau optiquement transparent et la couche de matériau a des propriétés de formation de faisceau pour la lumière transmise.

6. L'unité de transmission et de réception selon l'une quelconque des revendications précédentes, dans lequel au moins un masque imperméable à la lumière, de préférence un masque circulaire, est disposé entre l'émetteur de lumière et le récepteur de lumière.

7. L'unité de transmission et de réception selon l'une quelconque des revendications précédentes, dans lequel le support transparent est constitué de verre.

8. L'unité de transmission et de réception selon l'une quelconque des revendications précédentes, dans lequel le support transparent est constitué d'un polymère et/ou d'un matériau souple et le support transparent est transparent pour la longueur d'onde sélectionnée.

9. L'unité de transmission et de réception selon l'une quelconque des revendications précédentes, dans lequel la surface avant du récepteur de lumière se trouve sur le support et est mis en contact au moyen de la technologie de puce retournée.

10. L'unité de transmission et de réception selon l'une quelconque des revendications précédentes, dans lequel le support comprend un filtre optique comportant une sélection de longueur d'onde.

11. L'unité de transmission et de réception selon l'une quelconque des revendications précédentes, dans lequel le support présente des structures diffractives pour la diffraction ou dispersion de la lumière transmise.

12. L'unité de transmission et de réception selon l'une quelconque des revendications précédentes, dans lequel le support provoque une polarisation de la lumière.

13. L'unité de transmission et de réception selon l'une quelconque des revendications précédentes, dans lequel le récepteur de lumière est configuré comme une matrice de réception, comme une caméra CCD ou d'une manière CMOS de construction et comprend de préférence le traitement du signal et l'interface de signaux et / ou de préférence comme un monoboîtier comprend aussi un microcontrôleur, la logique programmable et d'autres circuits complexes.

14. Un codeur rotatif pour la mesure d'un angle de rotation de deux objets par rapport à l'autre en rotation, comprenant une unité d'émission et de réception selon l'une quelconque des revendications précédentes, **caractérisé en ce que** ce codeur rotatif est configuré comme un codeur de polarisation ayant un polariseur qui tourne par rapport à une source lumineuse et au cours duquel la lumière transmise est réfléchie; et **en ce que** le récepteur comporte au moins deux éléments de réception en amont lesquels un analyseur de polarisation est disposé en sorte que les deux éléments de réception ayant une distance d' angle de rotation l'un de l'autre.
